# EUROPÄISCHE PATENTSCHRIFT

(11) **EP 1 931 970 B1**
(45) Veröffentlichungstag und Bekanntmachung des Hinweises auf die Patenterteilung: **20.07.2011**
(21) Anmeldenummer: 06805711.6
(22) Anmeldetag: 14.09.2006
(51) Int. Cl.: G01N 21/64, G02B 21/00

(54) **VORRICHTUNG UND VERFAHREN ZUR TIEFENAUFGELÖSTEN OPTISCHEN ERFASSUNG EINER PROBE**
PROCESS AND DEVICE FOR OPTICALLY SENSING A SPECIMEN WITH A LARGE DEPTH OF FIELD
DISPOSTIF ET PROCEDE D'ENREGISTREMENT OPTIQUE D'UN ECHANTILLON AVEC UNE RESOLUTION EN PROFONDEUR

(30) Priorität: 29.09.2005 DE 102005046754
(43) Veröffentlichungstag der Anmeldung: 18.06.2008
(73) Patentinhaber: Carl Zeiss MicroImaging GmbH, 07745 Jena (DE)
(72) Erfinder: WOLLESCHENSKY, Ralf, 99510 Apolda (DE)
(86) Internationale Anmeldenummer: PCT/EP2006/008945
(87) Internationale Veröffentlichungsnummer: WO 2007/036304

(56) Entgegenhaltungen:
- WO-A-01/71279
- WO-A-98/45745
- WO-A1-02/12864
- WO-A1-02/12864
- DE-A1- 10 254 139
- DE-A1- 10 254 139
- DE-A1- 10 257 237

## Beschreibung

Die Erfindung betrifft eine Vorrichtung und ein Verfahren zur tiefenaufgelösten optischen Erfassung einer Probe. Insbesondere betrifft sie das Gebiet der sogenannten strukturierten Beleuchtung, bei dem die Modulationstiefe der optischen Abbildung einer Amplitudenstruktur (beispielsweise eines Gitters) als Kriterium für die Tiefenschärfe genutzt wird. Das Bild der periodischen Struktur zeichnet sich durch die Frequenz der Modulation und die Phasenstellung (Bildphase) der Modulation aus. Durch eine Phasenverschiebung der Struktur senkrecht zur optischen Achse können unterschiedliche Projektionsszenarien erhalten werden. Um einen tiefendiskriminierten optischen Schnitt berechnen zu können, werden beispielsweise drei Phasenbilder bei 0°, 120° uns 240° benötigt, wie dies beispielsweise bei M.A.A. Nil et al., "Method of obtaining optical sectioning by using structured light in a conventional microscope", Optics Letters 22 (24) 1997, 1905 - 1907 beschrieben ist. Nachteilig ist hier, daß mehrere Bilder zeitlich nacheinander aufgezeichnet, ausgelesen und verrechnet werden müssen.

Um möglichst die optischen Schnittbilder schon am Detektor zu erzeugen, so daß eine Einschränkung des Dynamikbereichs des Detektors durch nichtkonfokale Hintergrundsignale verhindert wird, wird in der DE 102 54 139 A1 vorgeschlagen, Anteile des Detektions- bzw. Probenlichtes, die zueinander eine Phasenverschiebung aufweisen, räumlich aufzuteilen. Dies führt jedoch dazu, daß z.B. bei einer linienförmigen Beleuchtung mindestens zwei Detektorzeilen vorzusehen sind.

Ausgehend hiervon ist es Aufgabe der Erfindung, ein Verfahren oder eine Vorrichtung zur tiefenaufgelösten optischen Erfassung einer Probe bereitzustellen, bei denen die eingangs beschriebenen Nachteile vermieden werden können.

Erfindungsgemäß wird die Aufgabe gelöst durch eine Vorrichtung zur tiefenaufgelösten optischen Erfassung einer Probe entsprechend Anspruch 1.

Durch das Vorsehen von zwei separaten Auswertekanälen und der Möglichkeit, die Aufnahmepixel abwechselnd mit dem einen oder anderen Auswertekanal zu verbinden, kann mit denselben Aufnahmepixeln die beiden Phasenanteile des Probenlichtes erfaßt werden, so daß der Dynamikbereich des Detektors durch nicht-konfokale Hintergrundsignale nicht eingeschränkt wird.

Das Probenlicht kann aufgrund einer Wechselwirkung des Lichtes des Beleuchtungsmoduls mit der Probe erzeugt werden. Insbesondere kann das Probenlicht Fluoreszenzlicht, reflektiertes Licht, Lumineszenzlicht, gestreutes und/oder transmittiertes Licht sein.

Das Muster, mit dem die Probe beleuchtet wird, ist eine vorbestimmte Intensitätsverteilung des Beleuchtungslichtes. Insbesondere wird ein periodisches Muster bzw. eine periodische Intensitätsverteilung erzeugt, wie z.B. eine sinusförmige Verteilung. Auch die zeitliche Änderung der Phase wird bevorzugt periodisch durchgeführt. Auch hier kann eine sinus- oder cosinusförmige zeitliche Phasenänderung durchgeführt werden.

Die Steuereinheit kann diese Aufnahmepixel so abwechselnd mit den beiden Auswertekanälen verbinden, daß die Phasenverschiebung 180° (n) beträgt. Damit wird ein optimales Ergebnis bei der Berechnung des Schnittbildes erreicht.

Jedes Aufnahmepixel weist zwei Subpixel auf, wobei eines der Subpixel nur mit dem ersten der beiden Auswertekanäle und das andere Subpixel nur mit dem zweiten Auswertekanal verbindbar ist. In dieser Art läßt sich das Detektionsmodul leicht in einfacher Art verwirklichen.

Die Aufnahmepixel können entlang einer Erstreckungsrichtung nebeneinander angeordnet sein. So wird insbesondere ein linienförmiger Detektionsbereich realisiert. Dieses ist insbesondere von Vorteil, wenn das Beleuchtungsmodul die Probe linienförmig beleuchtet und die linienförmige Beleuchtung quer zur Erstreckungsrichtung über die Probe abgelenkt wird, da in diesem Fall mittels dem Detektionsbereich immer der gerade linienförmig beleuchtete Probenbereich aufgenommen wird. Dies läßt sich insbesondere bei der Ausbildung der Vorrichtung als Laser-Scanning-Mikroskop besonders einfach verwirklichen, da der Scanner für die Ablenkung des Beleuchtungslichtes in der Regel auch dazu benutzt wird, daß Probenlicht zu descannen.

Insbesondere kann jeder der Auswertekanäle als separate Auswerteelektronik ausgebildet sein. Damit wird eine schnelle und genaue phasenabhängige Erfassung der Anteile des Probenlichtes möglich.

Jeder Auswertekanal kann für jedes Aufnahmepixel einen Integrator aufweisen, der die zugeführten Anteile während der Meßdauer aufsummiert.

Ferner kann die Auswerteeinheit zur Berechnung des optischen Schnittbildes die beiden (bevorzug aufsummierten) Anteile voneinander subtrahieren. Damit kann das Detektionsmodul hardwaremäßig schon alle wesentlichen (insbesondere zeitintensiven) Auswertungen durchführen, so daß zur Bilderzeugung des Schnittbildes die Bilddaten im wesentlichen nur noch entsprechend dargestellt werden müssen. Natürlich ist es möglich, mehrere optische Schnitte in verschiedenen Tiefen der Probe aufzunehmen, und aus diesen dann mit bekannten Verfahren eine entsprechende dreidimensionale Darstellung zu verwirklichen.

Bei einer linienförmigen Detektion wird die Phasenänderung bevorzugt in Richtung der linienförmigen Detektion durchgeführt.

Die erfindungsgemäße Vorrichtung zur tiefenausgelösten optischen Erfassung einer Probe ist als Mikroskop ausgebildet. Das Mikroskop ist ein Laser-Scanning-Mikroskop.

Ferner wird erfindungsgemäß ein Verfahren zur tiefenaufgelösten optischen Erfassung einer Probe entsprechend Anspruch 8 bereitgestellt.

Besonders bevorzugt ist es, wenn das detektierte Probenlicht mit einer Phasenverschiebung von 180° aufgeteilt wird. Dann können sehr gute Ergebnisse erzielt werden.

Bei dem Verfahren werden zur ortsauflösenden Detektion mehrere Aufnahmepixel vorgesehen, wobei jedes Aufnahmepixel zwei Subpixel aufweist und eines der Subpixel den ersten der beiden Anteile und das andere der beiden Subpixel den zweiten Anteil liefert.

Ferner wird eine linienförmige, ortsauflösende Detektion durchgeführt. In diesem Fall werden ortsauflösende Liniendetektoren verwendet.

Bei dem Verfahren kann ferner für jeden Anteil eine separate Auswerteelektronik vorgesehen werden, die beispielsweise jeweils einen Integrator aufweist, der die zugeführten Anteile über die Meßdauer ortsaufgelöst aufsummiert. Damit kann hardwaremäßig die wesentliche (insbesondere die zeitintensive) Auswertung zur Erzeugung des tiefenaufgelösten optischen Schnitts durchgeführt werden. Solche hardwaremäßigen Lösungen lassen sich in der Regel mit sehr hoher Genauigkeit und schneller betreiben als entsprechende softwaremäßig realisierte Lösungen.

Insbesondere werden zur Berechnung des optischen Schnittbildes die beiden Anteile voneinander subtrahiert. Damit kann man die gewünschte konfokale Bildinformation gewinnen.

Ferner kann die Probe linienförmig beleuchtet und die Phase in Richtung der linienförmige Beleuchtung geändert werden. Wenn die linienförmige Beleuchtung noch über die Probe gescannt wird, kann somit die gesamte Probe abgetastet werden, wobei nur eine linienförmige ortsaufgelöste Detektion notwendig ist.

Das erfindungsgemäße Verfahren zur tiefenaufgelösten optischen Erfassung einer Probe ist ein Mikroskopieverfahren. Das Mikroskopieverfahren ist ein Laser-Scanning-Mikroskopieverfahren.

Die Erfindung wird nachfolgend unter Bezugnahme auf die Zeichnung beispielhalber noch näher erläutert. Es zeigen:
- Fig. 1: eine schematische Ansicht einer Ausführungsform der erfindungsgemäßen Vorrichtung zur tiefenaufgelösten optischen Erfassung einer Probe;
- Fig. 2: eine vergrößerte schematische Darstellung des Detektionsmoduls 4 von Fig. 1;
- Fig. 3: ein Diagramm zur Darstellung des Meßsignals in Abhängigkeit der Anzahl der Perioden der Phasenänderung des Beleuchtungsmusters, und
- Fig. 4: eine alternative Ausführungsform des Detektionsmoduls 4 von Fig. 1.

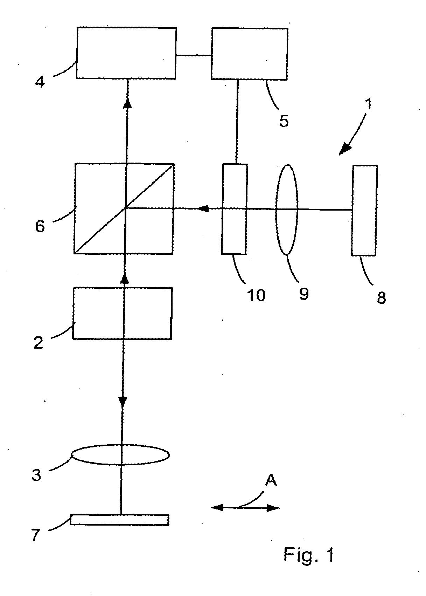

Bei der in Fig. 1 gezeigten Ausführungsform ist die Vorrichtung zur tiefenaufgelösten optischen Erfassung einer Probe als Laser-Scanning-Mikroskop ausgebildet, das ein Beleuchtungsmodul 1, ein Scanmodul 2, ein Mikroskopmodul 3, ein Detektionsmodul 4 sowie eine Steuereinheit 5 umfaßt.

Das Beleuchtungsmodul 1 erzeugt einen Laserstrahl, der über einen zwischen dem Beleuchtungsmodul 1 und dem Scanmodul 2 geschalteten Strahlteiler 6 zum Scanmodul 2 gelenkt wird, das den Laserstrahl über die Probe 7 ablenkt. Das Beleuchtungsmodul 1 ist hier so ausgebildet, daß der Laserstrahl auf oder bevorzugt in der Probe 7 linienförmig fokussiert ist, wobei sich die Linie senkrecht zur Zeicheneben erstreckt. Das Scanmodul 2 bewirkt eine Ablenkung dieses Linienfokus in einer Richtung A senkrecht zur Erstreckungsrichtung des Linienfokus, so daß so die gesamte Probe beleuchtet wird.

Das Beleuchtungsmodul 1 umfaßt zur Erzeugung des Laserstrahls eine Laserquelle 8, eine der Laserquelle 8 nachgeordnete Optik 9, die die linienförmige Fokussierung bewirkt, sowie ein transmissives Amplitudengitter 10, das dem Laserstrahl eine Intensitätsverteilung entlang der Erstreckungsrichtung des linienförmigen Fokus aufprägt. Bei dieser Intensitätsverteilung handelt es sich bevorzugt um eine periodische Intensitätsverteilung, z.B. eine cosinusförmige Verteilung. Zusätzlich wird das Amplitudengitter 10 während dem Betrieb der Vorrichtung in Erstreckungsrichtung des Linienfokus (also hier senkrecht zur Zeichenebene) schnell hin und her bewegt, so daß der Intensitätsverteilung noch eine sich zeitlich ändernde Phase aufgeprägt wird. Die Hin- und Herbewegung des Amplitudengitters 10 ist dabei so gewählt, daß sie deutlich schneller als die Ablenkung mittels dem Scanmodul 2 ist, so daß jeder linienförmig beleuchtete Abschnitt der Probe 7 mit einem Muster (Intensitätsverteilung des Amplitudengitters 10) beleuchtet wird, dessen Phase sich zeitlich ändert. Die Hin- und Herbewegung kann beispielsweise so schnell sein, daß jeder linienförmig beleuchtete Abschnitt während mehr als 20, mehr als 100 oder mehr als 1.000 Perioden der Hin- und Herbewegung beleuchtet wird. Der fokussierte Laserstrahl bewirkt in seinem Fokus die Erzeugung von Probenstrahlung, die über das Mikroskopmodul 3 zum Scanmodul 2 gelangt, so daß die Probenstrahlung hinter dem Scanmodul (also zwischen Scanmodul 2 und Strahlteiler 6) als ruhender Strahl vorliegt. Man spricht deshalb auch häufig davon, daß das Scanmodul 2 die Probenstrahlung descannt. Der Strahlteiler 6 ist so ausgebildet, daß er die Probenstrahlung transmittiert, so daß diese auf das Detektionsmodul 4 trifft.

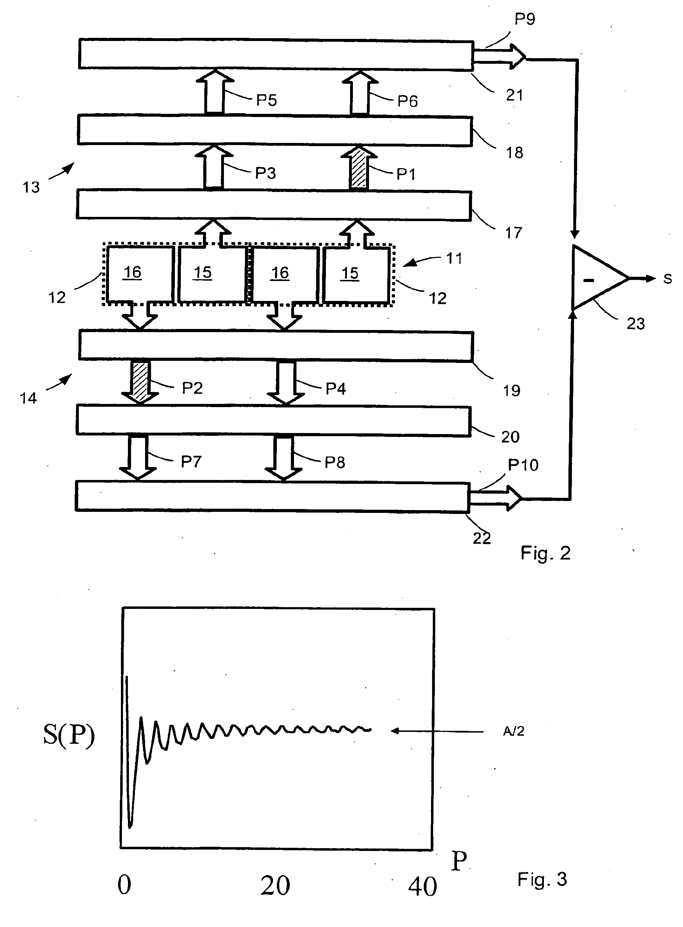

Das Detektionsmodul 4 weist, wie in Fig. 2 gezeigt ist, einen ortsauflösenden, linienförmigen Detektionsbereich 11 mit mehreren Aufnahmepixeln 12 auf. Hier sind zur Vereinfachung der Darstellung lediglich zwei Aufnahmepixel 12 dargestellt. Natürlich kann die Zahl der Aufnahmepixel sehr viel größer sein, z.B. 512 oder 1024 Aufnahmepixel.

Durch die nachfolgend beschriebene phasenabhängige Auswertung des Probenlichtes, kann trotz der praktisch auftretenden dreidimensionalen Beleuchtung der Probe nur die Ebene (optischer Schnitt) wiedergegeben werden, die in der Fokusebene des Mikroskopmoduls 3 liegt. Wenn man mehrere Schnitte in verschiedenen Tiefen der Probe aufnimmt, kann anschließend mit bekannten Verfahren ein dreidimensionales Bild der Probe berechnet werden.

Zur phasenabhängigen Auswertung des Probenlichtes sind zu beiden Seiten der linienförmig angeordneten Aufnahmepixel 12 Auswertekanäle 13 und 14 angeordnet, wobei der Auswertekanal 13 den In-Phase-Anteil des Probenlichtes und der Auswertekanal 14 den Außer-Phase-Anteil des Probenlichtes erfaßt. Durch die Hin- und Herbewegung des Phasengitters 10 werden die einzelnen Punkte innerhalb der beleuchteten Linie in der Probe mal mit maximaler Intensität und mal mit minimaler Intensität beleuchtet. Das Probenlicht, das von den Stellen kommt, die mit maximaler Intensität beleuchtet werden, entspricht dem In-Phase-Anteil, während das Probenlicht, das von den Stellen kommt, die mit minimaler Intensität beleuchtet werden, dem Außer-Phase-Anteil entspricht.

Die Zuordnung von minimaler oder maximaler Intensität zu dem Außer- und In-Phase-Anteil trifft natürlich nur dann streng zu, wenn die Intensitätsverteilung des Musters rechteckförmig ist. Bei z.B. einer cosinusförmigen Verteilung kann man einen Schwellwert festlegen, wobei Probenlicht, das von Punkten stammt, die mit einer über dem Schwellwert liegenden Intensität beleuchtet werden, dem In-Phase-Anteil entspricht. Probenlicht, das hingegen von Punkten stammt, die mit einer Intensität beleucht werden, die nicht größer als der Schwellwert ist, entspricht dem Außer-Phase-Anteil.

Man kann auch sagen, daß der In-Phase-Anteil hier dem Signal aus dem konfokalen Schnitt plus einem mit dem In-Phase-Anteil des Detektionsbereichs 11 multiplizieren Hintergrundsignal entspricht. Der In-Phase-Anteil des Detektionsbereichs 11 entspricht dem durch die Aufnahmepixel 12, die mit dem ersten Kanal 13 verbunden werden, gebildeten Gitter. In gleicher Weise trägt der Außer-Phase-Anteil das Signal aus dem konfokalen Schnittbild plus das mit dem Außer-Phase-Anteil des Detektionsbereichs 11 multiplizierten Hintergrundsignal. Der Außer-Phase-Anteil des Detektionsbereichs 11 entspricht dem durch die Aufnahmepixel 12, die mit dem zweiten Auswertekanal 14 verbunden sind, gebildeten Gitter.

Die beiden Auswertekanäle 13 und 14 integrieren bzw. summieren jeweils den In-Phase-Anteil und den Außer-Phase-Anteil für jedes Aufnahmepixel 12 über die Verweilzeit des Linienfokus an einer Stelle der Probe. Die aufintegrierten Einzelsignale für jedes Aufnahmepixel 12 werden anschließend voneinander abgezogen und ergeben das integrierte Meßsignal S. Bei einer genügend großen Anzahl von Hin- und Herbewegungen, kann beispielsweise für eine cosinusförmige Intensitätsverteilung des Linienfokus hergeleitet werden, daß das Meßsignal S(P) dem halben Signal aus dem optischen Schnittbild entspricht. Dieses Signal enthält nicht mehr die unerwünschten Hintergrundsignale aus Ebenen, die außerhalb des Fokus liegen. Eine entsprechende Herleitung dieses Zusammenhanges kann beispielsweise aus der DE 102 54 139 A1 entnommen werden, wobei der In- und Außer-Phase-Anteil des Detektionsbereiches 11 dem In- und Außer-Phase-Anteil der Struktur ST entspricht. In Fig. 3 ist hier schematisch gezeigt, wie sich das Meßsignal S in Abhängigkeit der Anzahl der Perioden P der Hin- und Herbewegung an den halben Signalwert A/2 annähert.

Bei dem in Fig. 2 gezeigten Detektionsbereich 11 ist jedes Aufnahmepixel 12 aus zwei nebeneinander angeordneten Subpixeln 15, 16 aufgebaut. Je nachdem ob der In-Phase-Anteil oder Außer-Phase-Anteil auf das Pixel 12 trifft, wird entweder das Subpixel 15 über ein Transfergate 17 mit einem Integrator 18 des ersten Auswertekanals 13 verbunden oder wird das Subpixel 16 über ein Transfergate 19 mit einem Integrator 20 des zweiten Auswertekanals 14 verbunden.

So wird zu einem ersten Zeitpunkt, das Subpixel 15 des rechten Aufnahmepixels 12 in Fig. 2 mit dem ersten Auswertekanal 13 und das Subpixel 16 des linken Aufnahmepixels 12 mit dem zweiten Auswertekanal 14 verbunden (schraffierte Pfeile P1, P2). Zu einem zweiten Zeitpunkt wird hingegen das Subpixel 16 des rechten Aufnahmepixels 12 mit dem zweiten Auswertekanal 14 und das Subpixel 15 des linken Aufnahmepixels 12 mit dem ersten Auswertekanal 13 verbunden (Pfeile P3, P4).

Somit wird über die selektive Verbindung der Auswertepixel 12 mit dem ersten oder zweiten Auswertekanal 13, 14 eine Aufspaltung des In-Phase-Anteils und des Außer-Phase-Anteils des Probenlichtes bewirkt. Nach Durchlauf aller Perioden der Hin- und Herbewegung des Amplitudengitters 10 werden die für die Aufnahmepixel 12 erzeugten In- und Außer-Phase-Meßsignale der Integratoren 18, 20 über entsprechende Schieberegister 21, 22 einem Subtrahierer 23 zugeführt (Pfeile P5, P6, P7, P8, P9, P10), der den Außer-Phase-Anteil von dem In-Phase-Anteil für jeden. Aufnahmepixel subtrahiert und somit die gewünschten Meßsignale S erzeugt. Aus den Meßsignalen S kann dann das gewünschte Schnittbild generiert bzw. berechnet werden.

Die Subpixel 15 und 16 der einzelnen Aufnahmepixel 12 müssen natürlich nicht nebeneinander angeordnet sein, wie dies in Fig. 2 gezeigt ist. Sie können auch übereinander angeordnet sein.

Der hier beschriebene Meßvorgang (einschließlich der scannenden Beleuchtung) wird mittels der Steuereinheit 5 gesteuert.

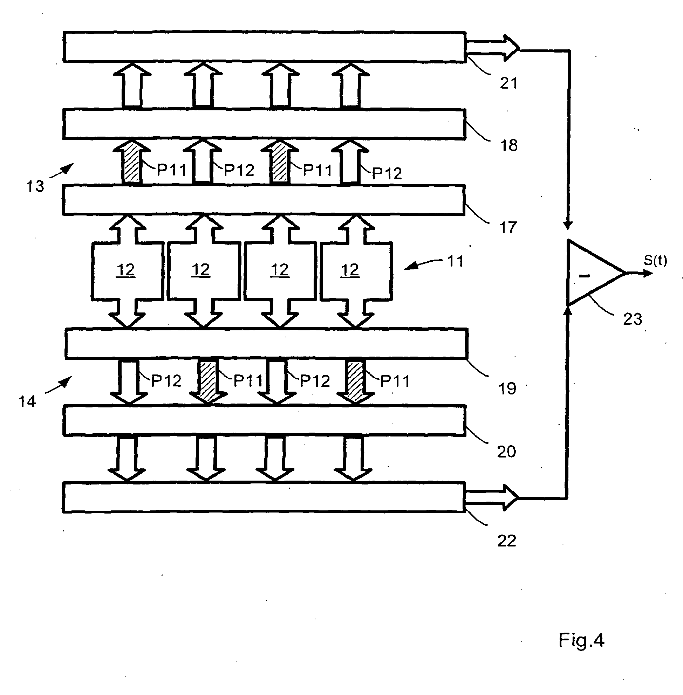

In Fig. 4 ist eine Abwandlung des in Fig. 2 gezeigten Aufnahmemoduls 4 dargestellt. Das Aufnahmemodul 4 in Fig. 4 unterscheidet sich von dem in Fig. 2 dargestellten durch die Ausbildung des Detektionsbereichs 11. Bei dem Detektionsbereich 11 in Fig. 4 ist jedes Aufnahmepixel aus einem Pixel aufgebaut, das selektiv mit dem ersten oder zweiten Auswertekanal 13, 14 vollständig verbunden werden kann. So können zu einem ersten Zeitpunkt das erste und dritte Auswertepixel 12 (von links in Fig. 4) mit dem ersten Auswertekanal 13 und das zweite und vierte Auswertepixel 12 mit dem zweiten Auswertekanal 14 verbunden sein (schraffierte Pfeile P11). Zu einem zweiten Zeitpunkt ist die Verbindung der Aufnahmepixel 12 mit den Auswertekanälen umgekehrt (Pfeile P12). Nach Ablauf der Meßdauer werden die in den Integratoren 18, 20 aufsummierten In- und Außer-Phase-Anteile wiederum über die Schieberegister 21, 22 dem Subtrahierer 23 zugeführt, der die Meßsignale S für die Aufnahmepixel 12 erzeugt. Damit wird im Unterschied zu der Ausbildung von Fig. 2 das Probenlicht vollständig verwendet, da stets alle Aufnahmepixel 12 entweder mit dem ersten oder zweiten Aufnahmeauswertekanal 13, 14 verbunden werden. Auch ist die Auflösung höher im Vergleich zu der Ausführungsform von Fig. 2, da alle Pixel stets zur Bilderzeugung beitragen.

## Patentansprüche

1. Laser-Scanning- Mikroskop, mit einer Laserquelle (1) zur Erzeugung eines Laserstrahls,
der eine Optik (9) zur linienförmigen Fokussierung des Laserstrahls auf oder in eine Probe nachgeordnet ist, sowie einem Scanmodul (2) zur Bewegung des Laserstrahls quer zur Erstreckungsrichtung des Linienfokus über die Probe (7),
wobei dem Laserstrahl mittels eines im Beleuchtungsstrahlengang angeordneten Amplftudengitters (10) eine vorzugsweise periodische Intensitätsverteilung in Erstreckungsrichtung seines Linienfokus aufgeprägt ist und das Amplitudengitter (10) im Mikroskop so ausgestaltet ist, dass es entlang der Erstreckungsrichtung des Linienfokus zur Erzeugung einer zeitlichen Phasenänderung der Intensitätsverteilung hin- und her bewegt wird,
**dadurch gekennzeichnet dass**
ein Detektionsmodul (4) vorgesehen ist, das einen den Probenbereich aufnehmenden, ortsauflösenden linienförmigen Detektionsbereich (11) mit mehreren Aufnahmepixeln (12), zwei mit den Aufnahmepixeln (12) verbindbare Auswertekanäle (13, 14) sowie eine mit den beiden Auswertekanälen (13, 14) verbundene Auswerteeinheit aufweist,
und eine Steuereinheit (5) vorgesehen ist, die während der Messdauer jedes Aufnahmepixel zeitlich synchron mit der Phase des detektierten Probenlichtes abwechselnd mit den beiden Auswertekanälen (13, 14) verbindet, so dass das detektierte Probenlicht in zwei Anteile, die zueinander eine Phasenverschiebung aufweisen, aufgeteilt und den beiden Auswertekanälen zugeführt wird,
wobei jedes Aufnahmepixel (12) zwei Subpixel (15, 16) aufweist, wobei eines der Subpixel (15, 16) nur mit dem ersten der beiden Auswertekanäle und das andere Subpixel nur mit dem zweiten Auswertekanal verbindbar ist.

2. Laser-Scanning-Mikroskop nach Anspruch 1, bei der die Steuereinheit (5) jedes Aufnahmepixel (12) so abwechselnd mit den beiden Auswertekanälen (13,14) verbindet, dass die Phasenverschiebung 180 Grad beträgt.

3. Laser-Scanning-Mikroskop nach einem der obigen Ansprüche, bei der die Aufnahmepixel (12) entlang einer Erstreckungsrichtung nebeneinander angeordnet sind.

4. Laser-Scanning-Mikroskop nach einem der obigen Ansprüche, bei der jeder der Auswertekanäle (13,14) als separate Auswerteelektronik ausgebildet ist.

5. Laser-Scanning-Mikroskop nach einem der obigen Ansprüche, bei der jeder Auswertekanal (13,14) für jedes Aufnahmepixel einen Integrator aufweist, der die zugeführten Anteile während der Messdauer aufsummiert.

6. Laser-Scanning-Mikroskop nach einem der obigen Ansprüche, bei der die Auswerteeinheit zur Berechnung des optischen Schnittbildes die beiden Anteile voneinander subtrahiert.

7. Laser-Scanning-Mikroskop nach einem der obigen Ansprüche, bei der das Beleuchtungsmodul (1) die Probe linienförmig beleuchtet und die Phase In Richtung der linienförmigen Beleuchtung ändert.

8. Laser-Scanning-Mikroskopiaverfahren zur tiefenaufgelösten optischen Erfassung einer Probe (7) mit einem über die Probe hin- und her bewegten linienförmig fokussierten Laserstrahl, dem eine vorzugsweise periodische Intensitätsverteilung aufgeprägt ist, deren Phase sich während der Hin- und Herbewegung zeitlich ändert, wodurch ein Probenbereich der Probe (7) während einer vorbestimmten Meßdauer mit einem Muster, dessen Phase während der Meßdauer zeitlich geändert wird, beleuchtet wird, wodurch Probenlicht, dem eine entsprechende sich zeitlich ändernde Phase aufgeprägt ist, erzeugt wird, bei dem der Probenbereich während der Meßdauer ortsauflösend detektiert wird, und bei dem
das detektierte Probenlicht in zwei Anteile, die zueinander eine Phasenverschiebung aufweisen, aufgeteilt wird und basierend auf den Anteilen ein optisches Schnittbild des Probenbereichs berechnet wird,
**dadurch gekennzeichnet dass** mittels eines Detektionsmoduls (4), das einen den Probenbereich aufnehmenden, linienförmigen ortsauflösenden Detektionsbereich (11) mit mehreren Aufnahmepixeln (12), zwei mit den Aufnahmepixeln (12) verbindbaren Auswertekanälen (13, 14) sowie eine mit den beiden Auswertekanälen (13, 14) verbundene Auswerteeinheit aufweist und mit einer Steuereinheit während der
Messdauer jedes Aufnahmepixel zeitlich synchron mit der Phase des detektierten Probenlichtes abwechselnd mit den beiden Auswertekanälen (13, 14) verbunden wird, wobei jedes Aufnahmepixel (12) zwei Subpixel (15, 16) aufweist und eines der Subpixel (15, 16) nur den ersten der beiden Anteile und das andere Subpixel nur den zweiten Anteil liefert.

9. Verfahren nach Anspruch 8, bei dem das detektierte Probenlicht mit einer Phasenverschiebung von 180 Grad aufgeteilt wird.

10. Verfahren nach einem der Ansprüche 8 bis 9, bei dem eine linienförmige, ortsauflösende Detektion durchgeführt wird.

11. Verfahren nach einem der Ansprüche 8 bis 10, bei dem für jeden Anteil eine separate Auswerteelektronik vorgesehen wird.

12. Verfahren nach einem der Ansprüche 8 bis 11, bei dem für jeden Anteil ein Integrator vorgesehen wird, der die zugeführten Anteile über die Messdauer ortsaufgelöst aufsummiert.

13. Verfahren nach einem der Ansprüche 8 bis 12, bei dem zur Berechnung des optischen Schnittbildes die beiden Anteile voneinander subtrahiert werden.

14. Verfahren nach einem der Ansprüche 8 bis 13, bei dem die Probe linienförmig beleucht und die Phase in Richtung der linienförmigen Beleuchtung geändert wird.

## Claims

1. Laser scanning microscope which has a laser source (1), for generating a laser beam, downstream of which there is arranged an optics (9) for linear focusing of the laser beam onto or into a sample, and has a scanning module (2) for moving the laser beam over the sample (7) in a fashion transverse to the direction of extent of the linear focus, and an amplitude grating (10) arranged in the illumination beam path being used to impress in the laser beam a preferably periodic intensity distribution in the direction of extent of its linear focus, and the amplitude grating (10) being configured in the microscope so that it is moved to and fro along the direction of extent of the linear focus in order to produce a temporal phase change in the intensity distribution, **characterized in that** a detection module (4) is provided which has a spatially resolving linear detection area (11) which accommodates the sample region and has a plurality of recording pixels (12), two evaluation channels (13, 14) which can be connected to the recording pixels (12), and an evaluation unit connected to the two evaluation channels (13, 14), and **in that** a control unit (5) is provided which, in the course of the measurement duration, connects each recording pixel to the two evaluation channels (13, 14) alternately in a fashion temporally synchronous with the phase of the detected sample light so that the detected sample light is split into two components, which are phase shifted relative to one another, and is fed to the two evaluation channels, each recording pixel (12) having two subpixels (15, 16), it being possible to connect one of the subpixels (15, 16) only to the first of the two evaluation channels, and to connect the other subpixel only to the second evaluation channel.

2. Laser scanning microscope according to Claim 1, in which the control unit (5) connects each recording pixel (12) to the two evaluation channels (13, 14) alternately so that the phase shift is 180 degrees.

3. Laser scanning microscope according to one of the above claims, in which the recording pixels (12) are arranged next to one another along a direction of extent.

4. Laser scanning microscope according to one of the above claims, in which each of the evaluation channels (13, 14) is designed as a separate evaluation electronics.

5. Laser scanning microscope according to one of the above claims, in which, for each recording pixel, each evaluation channel (13, 14) has an integrator which sums up the components fed in the course of the measurement duration.

6. Laser scanning microscope according to one of the above claims, in which the evaluation unit subtracts the two components from one another in order to calculate the optical cross-section.

7. Laser scanning microscope according to one of the above claims, in which the illumination module (1) illuminates the sample linearly, and the phase changes in the direction of the linear illumination.

8. Laser scanning microscopy method for depth-resolved optical detection of a sample (7) with the aid of a linearly focused laser beam which is moved to and fro over the sample and on which there is impressed a preferably periodic intensity distribution whose phase changes in a temporal fashion during the to and fro movement, a sample region of the sample (7) thereby being illuminated during a predetermined measurement duration with a pattern whose phase is changed temporally in the course of the measurement duration, sample light on which there is impressed a corresponding temporally changing phase thereby being generated, in which the sample area is detected with spatial resolution in the course of the measurement duration, and in which the detected sample light is split into two components which are phase shifted relative to one another, and an optical cross section of the sample region is calculated on the basis of the components, **characterized in that** in the course of the measurement duration each recording pixel is connected alternately to the two evaluation channels (13, 14) in a fashion temporally synchronous with the phase of the detected sample light by means of a detection module (4), which has a linear spatially resolving detection region (11) which accommodates the sample region and has a plurality of recording pixels (12), two evaluation channels (13, 14) which can be connected to the recording pixels (12), and an evaluation unit connected to the two evaluation channels (13, 14), and with the aid of a control unit, each recording pixel (12) having two subpixels (15, 16), and one of the subpixels (15, 16) supplying only the first of the two components, and the other subpixel only the second component.

9. Method according to Claim 8, in which the detected sample light is split with a phase shift of 180 degrees.

10. Method according to one of Claims 8 to 9, in which a linear, spatially resolving detection is carried out.

11. Method according to one of Claims 8 to 10, in which a separate evaluation electronics is provided for each component.

12. Method according to one of Claims 8 to 11, in which there is provided for each component an integrator which sums up in a spatially resolved fashion the components fed in the course of the measurement duration.

13. Method according to one of Claims 8 to 12, in which the two components are subtracted from one another in order to calculate the optical cross section.

14. Method according to one of Claims 8 to 13, in which the sample is linearly illuminated, and the phase is changed in the direction of the linear illumination.

## Revendications

1. Microscope à balayage laser, avec une source laser (1) pour la génération d'un faisceau laser,
placé en aval d'une optique (9) pour la focalisation en forme de ligne du faisceau laser sur ou dans un échantillon, ainsi que d'un module de balayage (2) pour le déplacement du faisceau laser transversalement à la direction d'extension de la focalisation linéaire sur l'échantillon (7),
dans lequel le faisceau laser subit une répartition d'intensité de préférence périodique, dans la direction d'extension de sa focalisation linéaire, au moyen d'une grille d'amplitude (10) disposée dans le chemin du faisceau d'éclairage, et la grille d'amplitude (10) est aménagée dans le microscope de manière à se déplacer par va et vient le long de la direction d'extension de la focalisation linéaire pour générer une modification temporelle de la phase de la répartition d'intensité, **caractérisé en ce que**
on a prévu un module de détection (4) qui comporte un espace de détection (11) en forme de ligne à résolution du lieu pour enregistrer l'espace d'analyse, avec plusieurs pixels d'enregistrement (12), deux canaux d'interprétation (13, 14) pouvant être reliés aux pixels d'enregistrement (12), ainsi qu'une unité d'interprétation reliée aux deux canaux d'interprétation (13, 14),
et on a prévu une unité de commande (5) qui pendant la durée de mesure, relie alternativement chaque pixel d'enregistrement avec les deux canaux d'interprétation (13, 14) de manière temporellement synchrone avec la phase de la lumière d'analyse détectée, de telle sorte que la lumière d'analyse détectée est répartie en deux composantes présentant un déphasage mutuel, et est acheminée vers les deux canaux d'interprétation,
dans lequel chaque pixel d'enregistrement (12) comporte deux sous-pixels (15, 16), un des sous-pixels (15, 16) ne pouvant être relié qu'au premier des deux canaux d'interprétation et l'autre sous-pixel ne pouvant être relié qu'au deuxième canal d'interprétation.

2. Microscope à balayage laser selon la revendication 1, dans lequel l'unité de commande (5) relie alternativement chaque pixel d'enregistrement (12) aux deux canaux d'interprétation (13, 14) de manière à ce que le déphasage soit de 180 degrés.

3. Microscope à balayage laser selon une des revendications précédentes, dans lequel les pixels d'enregistrement (12) sont disposés côte à côte le long d'une direction d'extension.

4. Microscope à balayage laser selon une des revendications précédentes, dans lequel chacun des canaux d'interprétation (13, 14) est développé sous forme d'une électronique d'interprétation séparée.

5. Microscope à balayage laser selon une des revendications précédentes, dans lequel chaque canal d'interprétation (13, 14) comporte pour chaque pixel d'enregistrement, un intégrateur qui totalise les composantes qui lui sont acheminées pendant la durée de mesure.

6. Microscope à balayage laser selon une des revendications précédentes, dans lequel l'unité d'interprétation soustrait les deux composantes l'une de l'autre pour le calcul de l'image optique en coupe.

7. Microscope à balayage laser selon une des revendications précédentes, dans lequel le module d'éclairage (1) éclaire l'échantillon sous forme de ligne et modifie la phase dans à direction de l'éclairage sous forme de ligne.

8. Procédé de microscopie à balayage laser pour l'enregistrement optique d'un échantillon (7) avec une résolution en profondeur, avec un faisceau laser, focalisé sous forme de ligne se déplaçant sur l'échantillon par va et vient, qui subit une répartition d'intensité de préférence périodique, dont la phase se modifie temporellement pendant le déplacement par va et vient, moyennant quoi pendant une durée de mesure prédéfinie, un espace d'analyse de l'échantillon (7) est éclairé au moyen d'un motif dont on modifie temporellement la phase pendant la durée de mesure, moyennant quoi on génère de la lumière d'analyse qui subit une modification temporelle correspondante de la phase, l'espace d'analyse étant détecté avec une résolution du lieu pendant la durée de mesure, et la lumière d'analyse détectée étant répartie en deux composantes présentant un déphasage mutuel, et on calcule une l'image optique en coupe de l'espace d'analyse en se fondant sur les composantes, **caractérisé en ce que**
au moyen d'un module de détection (4) qui comporte un espace de détection (11) à résolution du lieu, en forme de ligne pour enregistrer l'espace d'analyse, avec plusieurs pixels d'enregistrement (12), deux canaux d'interprétation (13, 14) pouvant être reliés aux pixels d'enregistrement (12), ainsi qu'une unité d'interprétation reliée aux deux canaux d'interprétation (13, 14), et avec une unité de commande qui pendant la durée de mesure, relie alternativement chaque pixel d'enregistrement avec les deux canaux d'interprétation (13, 14) de manière temporellement synchrone avec la phase de la lumière d'analyse détectée, chaque pixel d'enregistrement (12) comportant deux sous-pixels (15, 16) et un des sous-pixels (15, 16) ne fournissant que la première des deux composantes et l'autre sous-pixel que la deuxième composante.

9. Procédé selon la revendication 8, dans lequel la lumière d'analyse détectée est répartie avec un déphasage de 180 degrés.

10. Procédé selon une des revendications 8 à 9, dans lequel on effectue une détection à résolution du lieu en forme de ligne.

11. Procédé selon une des revendications 8 à 10, dans lequel on prévoit une électronique d'interprétation séparée pour chacune des composantes.

12. Procédé selon une des revendications 8 à 11, dans lequel on prévoit un intégrateur pour chacune des composantes, qui totalise les composantes qui lui sont acheminées pendant la durée de mesure avec une résolution du lieu.

13. Procédé selon une des revendications 8 à 12, dans lequel on soustrait les deux composantes l'une de l'autre pour le calcul de l'image optique en coupe.

14. Procédé selon une des revendications 8 à 13, dans lequel on éclaire l'échantillon sous forme de ligne et on modifie la phase dans la direction de l'éclairage sous forme de ligne.
